(19) Europäisches Patentamt
European Patent Office
Office européen des brevets

(11) **EP 1 362 167 B1**

(12) **EUROPÄISCHE PATENTSCHRIFT**

(45) Veröffentlichungstag und Bekanntmachung des Hinweises auf die Patenterteilung:
**11.03.2009   Patentblatt 2009/11**

(21) Anmeldenummer: **01991693.1**

(22) Anmeldetag: **22.12.2001**

(51) Int Cl.:
***F01N 9/00*** (2006.01)          ***F01N 3/023*** (2006.01)

(86) Internationale Anmeldenummer:
**PCT/DE2001/004924**

(87) Internationale Veröffentlichungsnummer:
**WO 2002/053891 (11.07.2002 Gazette 2002/28)**

(54) **VERFAHREN UND VORRICHTUNG ZUR STEUERUNG EINES ABGASNACHBEHANDLUNGSSYSTEMS**

METHOD AND DEVICE FOR CONTROLLING AN EXHAUST TREATMENT SYSTEM

PROCEDE ET DISPOSITIF DE COMMANDE D'UN SYSTEME DE RETRAITEMENT DES GAZ D'ECHAPPEMENT

(84) Benannte Vertragsstaaten:
**DE FR GB IT SE**

(30) Priorität: **08.01.2001   DE 10100418**

(43) Veröffentlichungstag der Anmeldung:
**19.11.2003   Patentblatt 2003/47**

(73) Patentinhaber: **ROBERT BOSCH GMBH**
**70442 Stuttgart (DE)**

(72) Erfinder:
• **PLOTE, Holger**
  **4482 Ennsdorf (AT)**
• **KRAUTTER, Andreas**
  **71711 Steinheim (DE)**
• **WALTER, Michael**
  **70806 Kornwestheim (DE)**
• **SOJKA, Juergen**
  **70839 Gerlingen (DE)**

(56) Entgegenhaltungen:
EP-A- 0 411 445          EP-A- 1 081 347
DE-A- 19 838 032          DE-A- 19 933 988

**Beschreibung**

Die Erfindung betrifft ein Verfahren und eine Vorrichtung zur Steuerung einer Brennkraftmaschine mit einem Abgasnachbehandlungssystem.

Die Erfindung betrifft weiterhin ein Computerprogramm sowie ein Computerprogrammprodukt.

Aus der DE 199 06 287 A1 sind ein Verfahren und eine Vorrichtung zur Steuerung einer Brennkraftmaschine mit einem Abgasnachbehandlungssystem bekannt geworden, bei denen ein Partikelfilter eingesetzt wird, welches die im Abgas enthaltenen Partikel filtert. Zur genauen Steuerung der Brennkraftmaschine mit einem Abgasnachbehandlungssystem muss der Zustand des Abgasnachbehandlungssystems bekannt sein. Insbesondere muss der Beladungszustand des Partikelfilters, das heißt, die Beladungsmenge mit Partikeln bekannt sein.

In der EP 1081347 A1 ist ein Verfahren zum Bestimmen des Beladungszustands eines Partikelfilters mit Partikeln beschrieben, bei welchem bei Vorliegen von ersten Betriebsbedingungen der Brennkraftmaschine der am Partikelfilter auftretende Differenzdruck der Ermittlung des Beladungszustands zugrunde gelegt wird. In einem Betriebszustand, in welchem mit nur einem geringen Abgas-Massenstrom gerechnet werden kann, wird die Ermittlung des Beladungszustands auf der Grundlage des am Partikelfilter auftretenden Differenzdrucks als unzuverlässig erachtet und der Beladungszustand stattdessen auf eine Berechnung gestützt, die auf eine geschätzte, fest vorgegebene Partikel-Produktionsrate der Brennkraftmaschine abgestellt ist.

Vorteile der Erfindung

Mit der erfindungsgemäßen Vorgehensweise ist eine einfache Ermittlung des Zustands des Abgasnachbehandlungssystems möglich. Ermittelt wird eine den Zustand des Abgasnachbehandlungssystems charakterisierende erste Zustandsgröße, ausgehend von wenigstens einer Druckdifferenz zwischen dem Druck vor dem Abgasnachbehandlungssystem und dem Druck nach dem Abgasnachbehandlungssystem. Simuliert wird weiterhin eine den Zustand des Abgasnachbehandlungssystems zweite charakterisierende Zustandsgröße, ausgehend von wenigstens einer Betriebskenngröße der Brennkraftmaschine. Bei Vorliegen erster Betriebszustände der Brennkraftmaschine wird die erste Zustandsgröße und bei Vorliegen von den ersten Betriebszustände unterschiedlichen zweiten Betriebszuständen die simulierte Zustandsgröße ausgewählt.

Als Betriebskenngröße wird vorzugsweise eine Größe verwendet, die vom Abgasvolumenstrom, der Drehzahl, der eingespritzten Kraftstoffmenge, der zugeführten Frischluftmenge oder dem Fahrerwunsch abhängt.

Dies bedeutet bei einem Abgasnachbehandlungssystem mit einem Partikelfilter, das in ersten Betriebszuständen der Brennkraftmaschine der Beladungszustand auf der Grundlage des am Partikelfilter auftretenden Differenzdrucks ermittelt wird. Dadurch ist eine sehr genaue Erfassung des Beladungszustands möglich. In zweiten Betriebszuständen der Brennkraftmaschine wird die Ermittlung des Beladungszustands dagegen auf eine Simulation gestützt. Die zweiten Betriebszustände der Brennkraftmaschine sind dadurch definiert, dass in diesen zweiten Betriebszuständen eine genaue Erfassung des Differenzdrucks nicht möglich ist. Dies beruht darauf, dass die Messgrößen in bestimmten Betriebszuständen ungenau sind. Dies ist insbesondere der Fall, wenn der Abgasvolumenstrom kleine Werte annimmt.

Ferner reagiert das Abgasnachbehandlungssystem auf Änderungen mit einer gewissen zeitlichen Verzögerung. Dies gilt insbesondere für die Messgrößen.

Eine Ausgestaltung sieht vor, dass die simulierte Zustandsgröße ausgehend von wenigstens der Drehzahl der Brennkraftmaschine und/oder einem die eingespritzte Kraftstoffmenge charakterisierenden Signal simuliert wird.

Eine andere Ausgestaltung sieht vor, dass der zweite Betriebszustand der Brennkraftmaschine vorliegt, wenn eine Volumenstromgröße, die den Abgasvolumenstrom charakterisiert, kleiner als ein erster Schwellenwert ist. Alternativ kann vorgesehen sein, dass die Zustandsgröße simuliert wird, wenn dynamische Betriebszustände der Brennkraftmaschine vorliegen. Durch diese Maßnahmen, die einzeln oder gemeinsam durchgeführt werden können, kann die Genauigkeit bei der Erfassung des Beladungszustands des Partikelfilters mit Partikeln deutlich verbessert werden.

Vorteilhaft ist es, dass der dynamische Betriebszustände Brennkraftmaschine erkannt wird, wenn die Änderung bestimmter Betriebskenngrößen einen Schwellenwert überschreitet. Besonders geeignet als Betriebskenngrößen sind Größen, welche die eingespritzte Kraftstoffmenge, die Drehzahl, den Fahrerwunsch und/oder die Luftmenge charakterisieren.

Eine besonders einfache und genaue Simulation der Zustandsgröße ergibt sich dadurch, dass die Simulation der Zustandsgröße eine Integration beinhaltet. Beim Übergang vom ersten zum zweiten Betriebszustand wird der, ausgehend von der Druckdifferenz vorgegebene Wert der Zustandsgröße als Startwert der Integration verwendet. Entsprechend wird bei der Inbetriebnahme des Abgasnachbehandlungssystems ein bei der letzten Außerbetriebsetzung abgespeicherter Wert als Startwert verwendet. Vorzugsweise wird der Startwert dabei in einem Speicher abgelegt, der seinen Inhalt beim Ausschalten nicht verliert. Insbesondere wird der Wert in einem EEPROM abgelegt.

Die erfindungsgemäße Vorgehensweise betrifft weiterhin eine Vorrichtung zur Steuerung eines Abgasnachbehandlungssystems einer Brennkraftmaschine, welches Mittel aufweist, die zur Durchführung des Verfahrens speziell hergerichtet sind.

Vorgesehen ist ein Computerprogramm mit Programmcode-Mitteln, um alle Schritte des Verfahrens durchzuführen, wenn das Programm auf einem Steuergerät für eine Brennkraftmaschine ausgeführt wird.

Vorgesehen sind weiterhin ein Computerprogrammprodukt mit Programmcode-Mitteln, die auf einem computerlesbaren Datenträger gespeichert sind, um das erfindungsgemäße Verfahren durchzuführen, wenn das Programm auf einem Steuergerät für eine Brennkraftmaschine ausgeführt wird.

Weitere Einzelheiten ergeben sich aus weiteren abhängigen Ansprüchen und aus der folgenden Beschreibung

Zeichnung

Die Erfindung wird nachstehend anhand der in der Zeichnung dargestellten Ausführungsformen erläutert.

Es zeigen

Figur 1:    ein Blockdiagramm einer erfindungsgemäßen Vorrichtung,

Figur 2:    eine detaillierte Darstellung einer Simulation,

Figur 3:    ein Blockdiagramm einer erfindungsgemäßen Vorrichtung und

Figur 4:    ein Flussdiagramm.

Beschreibung von Ausführungsbeispielen

Im Folgenden wird die erfindungsgemäße Vorrichtung am Beispiel einer selbstzündende Brennkraftmaschine dargestellt, bei der die Kraftstoffzumessung mittels eines sogenannten Common-Rail-Systems gesteuert wird. Die erfindungsgemäße Vorgehensweise ist aber nicht auf diese Systeme beschränkt. Sie kann auch bei anderen Brennkraftmaschinen eingesetzt werden.

Mit 100 ist eine Brennkraftmaschine bezeichnet, die über eine Ansaugleitung 102 Frischluft zugeführt bekommt und über eine Abgasleitung 104 Abgas abgibt. In der Abgasleitung 104 ist ein Abgasnachbehandlungsmittel 110 angeordnet, von dem die gereinigten Abgase über die Leitung 106 in die Umgebung gelangen. Das Abgasnachbehandlungsmittel 110 umfaßt im wesentlichen einen sogenannten Vorkatalysator 112 und stromabwärts einen Filter 114. Vorzugsweise ist zwischen dem Vorkatalysator 112 und dem Filter 114 ein Temperatursensor 124 angeordnet, der ein Temperatursignal T bereitstellt. Alternativ kann der Temperatursensor 124 auch vor und/oder nach dem Abgasnachbehandlungsmittel 110 angeordnet sein. Vor dem Vorkatalysator 112 und nach dem Filter 114 sind jeweils Sensoren 120a und 120b vorgesehen. Diese Sensoren wirken als Differenzdrucksensor 120 und stellen ein Differenzdrucksignal DP bereit, das den Differenzdruck zwischen Eingang und Ausgang des Abgasnachbehandlungsmittel charakterisiert. Ferner ist in der Ansaugleitung 102 ein Sensor 126 angeordnet, der ein Signal erfasst, das die Menge ML der zugeführten Frischluftmenge charakterisiert. Hierzu wird vorzugsweise ein sogenannter Luftmengenmesser eingesetzt. Ein Sensor 125 liefert ein Signal PV, der den Druck vor dem Abgasnachbehandlungssystem 110 charakterisiert.

Der Brennkraftmaschine 100 wird über eine Kraftstoffzumeßeinheit 140 Kraftstoff zugemessen. Diese mißt über Injektoren 141, 142, 143 und 144 den einzelnen Zylindern der Brennkraftmaschine 100 Kraftstoff zu. Vorzugsweise handelt es sich bei der Kraftstoffzumeßeinheit um ein sogenanntes Common-Rail-System. Eine Hochdruckpumpe fördert Kraftstoff in einen Druckspeicher. Vom Speicher gelangt der Kraftstoff über die Injektoren in die Brennkraftmaschine.

An der Kraftstoffzumeßeinheit 140 sind verschiedene Sensoren 151 angeordnet, die Signale bereitstellen, die den Zustand der Kraftstoffzumeßeinheit charakterisieren. Hierbei handelt es sich bei einem Common-Rail-System beispielsweise um den Druck P im Druckspeicher. An der Brennkraftmaschine 100 sind Sensoren 152 angeordnet, die den Zustand der Brennkraftmaschine charakterisieren. Hierbei handelt es sich vorzugsweise um einen Drehzahlsensor, der ein Drehzahlsignal N bereitstellt und um weitere Sensoren, die nicht dargestellt sind.

Die Ausgangssignale dieser Sensoren gelangen zu einer Steuerung 130, die als eine erste Teilsteuerung 132 und eine zweite Teilsteuerung 134 dargestellt ist. Vorzugsweise bilden die beiden Teilsteuerungen eine bauliche Einheit. Die erste Teilsteuerung 132 steuert vorzugsweise die Kraftstoffzumeßeinheit 140 mit Ansteuersignalen AD, die die Kraftstoffzumessung beeinflussen, an. Hierzu beinhaltet die erste Teilsteuerung 132 eine Kraftstoffmengensteuerung 136. Diese liefert ein Signal ME, das die einzuspritzende Menge charakterisiert, an die zweite Teilsteuerung 134.

Die zweite Teilsteuerung 134 steuert vorzugsweise das Abgasnachbehandlungssystem und erfaßt hierzu die entsprechenden Sensorsignale. Desweiteren tauscht die zweite Teilsteuerung 134 Signale, insbesondere über die eingespritzte Kraftstoffmenge ME, mit der ersten Teilsteuerung 132 aus. Vorzugsweise nutzen die beiden Steuerungen gegenseitig die Sensorsignale und die internen Signale.

Die erste Teilsteuerung, die auch als Motorsteuerung 132 bezeichnet wird, steuert abhängig von verschiedenen Signalen, die den Betriebszustand der Brennkraftmaschine 100, den Zustand der Kraftstoffzumeßeinheit 140 und die Umgebungsbedingung charakterisieren sowie einem Signal, das die von der Brennkraftmaschine gewünschte Leistung und/oder Drehmoment charakterisiert, das Ansteuersignal AD zur Ansteuerung der Kraftstoffzumeßeinheit 140. Solche Einrichtungen sind bekannt und vielfältig eingesetzt.

Insbesondere bei Dieselbrennkraftmaschinen können Partikelemissionen im Abgas auftreten. Hierzu ist es vorgesehen, daß die Abgasnachbehandlungsmittel 110 diese aus dem Abgas herausfiltern. Durch diesen Filtervorgang sammeln sich in dem Filter 114 Partikel an. Diese Partikel werden dann in bestimmten Betriebszuständen, Beladungszuständen und/oder nach Ablauf bestimmter Zeiten oder Zählerstände für Kraftstoffmenge oder Fahrstrecke verbrannt, um den Filter zu reinigen. Hierzu ist üblicherweise vorgesehen, daß zur Regeneration des Filters 114 die Temperatur im Abgasnachbehandlungsmittel 110 soweit erhöht wird, daß die Partikel verbrennen.

Zur Temperaturerhöhung ist der Vorkatalysator 112 vorgesehen. Die Temperaturerhöhung erfolgt beispielsweise dadurch, daß der Anteil an unverbrannten Kohlenwasserstoffen im Abgas erhöht wird. Diese unverbrannten Kohlenwasserstoffe reagieren dann in dem Vorkatalysator 112 und erhöhen dadurch dessen Temperatur und damit auch die Temperatur des Abgases, das in den Filter 114 gelangt.

Diese Temperaturerhöhung des Vorkatalysators und der Abgastemperatur erfordert einen erhöhten Kraftstoffverbrauch und soll daher nur dann durchgeführt werden, wenn dies erforderlich ist, d.h. der Filter 114 mit einem gewissen Anteil von Partikeln beladen ist. Eine Möglichkeit den Beladungszustand zu erkennen besteht darin, den Differenzdruck DP zwischen Eingang und Ausgang des Abgasnachbehandlungsmittel zu erfassen und ausgehend von diesem den Beladungszustand zu ermitteln. Dies erfordert einen Differenzdrucksensor 120.

Erfindungsgemäß ist vorgesehen, daß ausgehend von dem Differenzdruck eine Zustandsgröße B vorgegeben wird, die den Zustand des Abgasnachbehandlungssystems charakterisiert. Diese Zustandsgröße B kennzeichnet den Beladungszustand des Filters 114 und charakterisiert die Menge an Partikeln, die im Filter abgelagert sind. Wird ein entsprechender Beladungszustand erreicht, wird durch Ansteuerung der Kraftstoffzumeßeinheit 140 sowie weiterer Maßnahmen die Regeneration des Filters 114 durchgeführt.

Insbesondere bei kleinen Abgasvolumenströmen ist die Auswertung des Differenzdruckes problematisch, da sich bei kleinen Volumenströmen nur eine kleine Druckdifferenz ergibt. Als Abgasvolumenstrom wird das Abgasvolumen bezeichnet, das in einer bestimmten Zeit durch das Abgassystem strömt. Ferner sind dynamische Betriebszustände problematisch, da Druckschwankungen und Laufzeiteffekte auftreten können.

Erfindungsgemäß ist deshalb vorgesehen, dass bei vorliegen erster Betriebszustände der Brennkraftmaschine die den Zustand des Abgasnachbehandlungssystems charakterisierende Zustandsgröße (B) ausgehend von wenigstens einer Druckdifferenz zwischen dem Druck vor und dem Druck nach dem Abgasnachbehandlungssystems vorgebbar ist, und bei vorliegen zweiter Betriebszustände wird die Zustandsgröße (B) ausgehend von wenigstens einer Betriebskenngröße der Brennkraftmaschine simuliert.

Bei der Simulation wird die Zustandsgröße ausgehend von verschiedenen Größen, insbesondere der Drehzahl N und der eingespritzten Kraftstoffmenge ME, berechnet. Hierzu wird ausgehend von diesen Größen die erwartete Partikelemissionen bestimmt und dadurch der Beladungszustand simuliert. Anstelle der Drehzahl N und der eingespritzten Kraftstoffmenge ME können auch andere Signale, die diese Größe charakterisieren, verwendet werden. So kann beispielsweise das Ansteuersignal, insbesondere die Ansteuerdauer, für die Injektoren und/oder eine Momentengröße als Kraftstoffmenge ME verwendet werden.

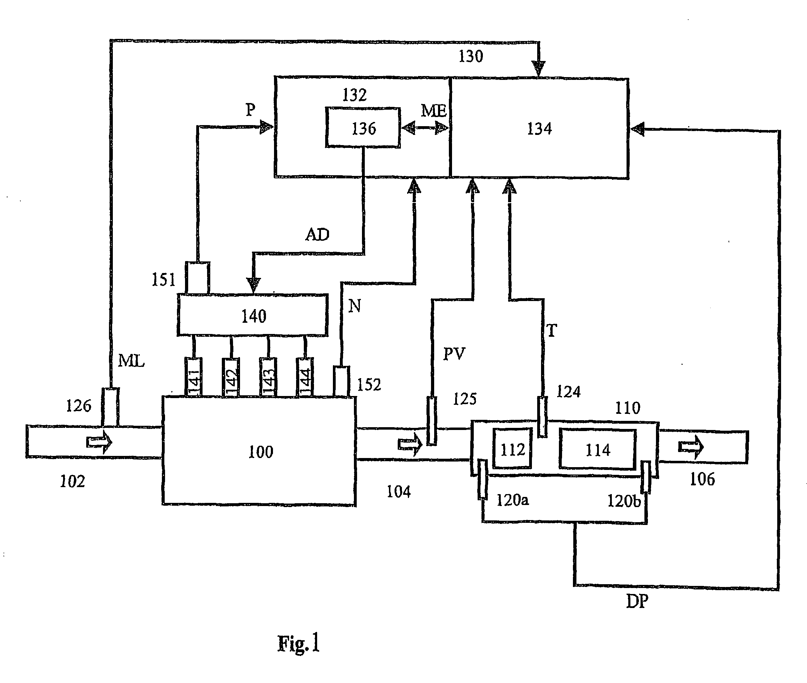

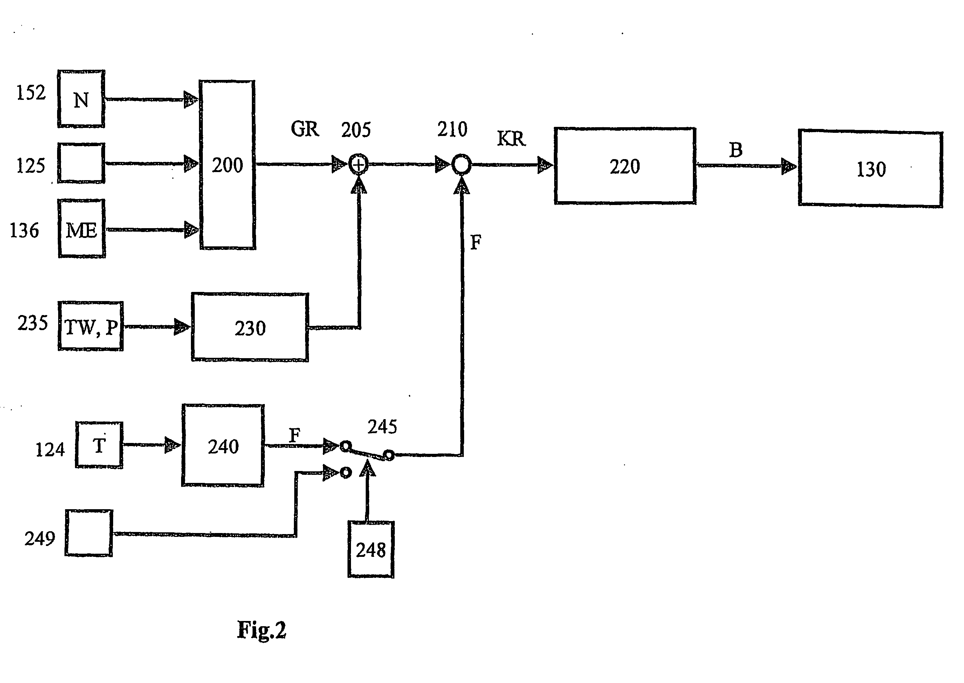

Ein Verfahren und eine Vorrichtung zur Ermittlung des Beladungszustandes bzw. der Größe B, die den Zustand des Abgasnachbehandlungssystems charakterisiert, ist in der Figur 2 als Blockdiagramm dargestellt. Bereits in Figur 1 beschriebene Elemente sind mit entsprechenden Bezugszeichen bezeichnet.

Einem Grundkennfeld 200 werden die Ausgangssignale N eines Drehzahlsensors 152, eine Größe ME der Kraftstoffzumeßsteuerung 136, die die eingespritzte Kraftstoffmenge kennzeichnet, und/oder eine Größe, die die Sauerstoffkonzentration charakterisiert, zugeleitet. Vorzugsweise wird die Größe, die die Sauerstoffkonzentration charakterisiert, mittels eines Sensors oder einer Berechnung 125 vorgegeben.

Das Grundkennfeld 200 beaufschlagt einen ersten Verknüpfungspunkt 205 mit einer Größe GR, die den Grundwert des Partikelausstoßes charakterisiert. Der erste Verknüpfungspunkt 205 beaufschlagt einen zweiten Verknüpfungspunkt 210 mit einem Signal, der wiederum einen Integrator 220 mit einer Größe KR, die den Partikelzuwachs im Filter 114 charakterisiert, beaufschlagt. Der Integrator 220 liefert die Zustandsgröße B, die den Zustand des Abgasnachbehandlungssystems charakterisiert. Diese Zustandsgröße B entspricht dem Beladungszustand des Filters 114. Diese Zustandsgröße B wird der Steuerung 130 zur Verfügung gestellt.

Am zweiten Eingang des Verknüpfungspunktes 205 liegt das Ausgangssignal einer ersten Korrektur 230, der das Ausgangssignal verschiedener Sensoren 235 zugeleitet wird. Die Sensoren 235 liefern Signale, die insbesondere die Umgebungsbedingung charakterisieren. Dies sind z.B. die Kühlwassertemperatur TW, die Lufttemperatur und der Luftdruck PL. Dem zweiten Eingang des Verknüpfungspunktes 210 wird über ein Schaltmittel 245 das Ausgangssignal einer zweiten Korrektur 240 zugeleitet. Der zweiten Korrektur 240 wird das Ausgangssignal T des Sensors 124 zugeleitet. Alternativ kann über das Schaltbild 245 dem zweiten Eingang des zweiten Verknüpfungspunktes 210 auch das Ausgangssignal einer Ersatzwertvorgabe 249 zugeleitet werden. Das Schaltmittel 245 wird von einer Fehlererkennung 248 angesteuert.

Besonders vorteilhaft ist es, wenn der Einfluss der Sauerstoffkonzentration im Abgas mittels einer weiteren Korrektur, entsprechend der Korrektur 230, erfolgt.

In dem Grundkennfeld 200 sind abhängig vom Betriebszustand der Brennkraftmaschine, insbesondere der Drehzahl N, der eingespritzten Menge ME und/oder der Größe, die die Sauerstoffkonzentration charakterisiert, der Grundwert GR der Partikelemission abgelegt. Besonders vorteilhaft ist es, wenn die Drehzahl N und die Größe, die die Sauerstoffkonzentration charakterisiert, berücksichtigt wird. Ferner ist vorteilhaft, wenn die Drehzahl N und die eingespritzte Menge ME berücksichtigt wird.

Neben diesen Größen können noch weitere Größen berücksichtigt werden. Anstelle der Menge ME kann auch eine Größe verwendet werden, die die Menge an eingespritztem Kraftstoff charakterisiert.

In dem ersten Verknüpfungspunkt 205 wird dieser Wert abhängig von der Temperatur des Kühlwassers und der Umgebungsluft sowie dem Atmosphärendruck korrigiert. Diese Korrektur berücksichtigt deren Einfluß auf den Partikelausstoß der Brennkraftmaschine 100.

In dem zweiten Verknüpfungspunkt 210 wird der Einfluß der Temperatur des Katalysators berücksichtigt. Die Korrektur berücksichtigt, daß ab einer bestimmten Temperatur T1 die Partikel in dem Filter nicht abgelagert, sondern unmittelbar in unschädliche Bestandteile umgesetzt werden. Unterhalb dieser Temperatur T1 erfolgt keine Umsetzung und die Partikel werden alle im Filter abgelagert.

Die zweite Korrektur 240 gibt abhängig von der Temperatur T des Abgasnachbehandlungsmittels 110 einen Faktor F vor, mit dem die Grundemission GR vorzugsweise multipliziert wird.

Bis zu der Temperatur T1 nimmt der Faktor F den Wert 1 an. Dies bedeutet unterhalb der Temperatur T1 wird in dem Verknüpfungspunkt 210 der Grundwert GR derart mit dem Faktor F verknüpft, daß der Wert KR gleich dem Wert GR ist. Ab der Temperatur T1 nimmt der Faktor F ab und erreicht bei einer bestimmten Temperatur T2 den Wert Null, d.h. die gesamte Emission an Partikeln wird unmittelbar umgesetzt, d.h. dem Filter 114 werden keine Partikel mehr zugeführt. Übersteigt die Temperatur den Wert T3, so nimmt der Faktor den negativen Wert -x an. Dies bedeutet, obwohl dem Filter 114 Partikel zugeführt werden, verringert sich die Beladung des Filters 114.

Wird von der Fehlererkennung 248 ein defekter Temperatursensor T24 erkannt, so wird anstelle des Temperaturwerts T ein Ersatzwert der Ersatzwertvorgabe 249 verwendet. Vorzugsweise wird dieser Ersatzwert ebenfalls abhängig von verschiedenen Betriebskenngrößen, wie beispielsweise der eingespritzten Kraftstoffmenge ME vorgegeben.

Dieser so korrigierte Wert KR, der den Partikelmassenstrom charakterisiert, der zur Beladung des Filters 114 führt, wird dem Integrator 220 zugeleitet. Dieser Integrator 220 summiert die Größe über der Zeit auf und gibt die Zustandsgröße B ab, die den Beladungszustand des Filters 114 charakterisiert. Das korrigierte Ausgangssignal des Grundkennfeldes wird zur Ermittlung der Zustandsgröße B aufintegriert.

Üblicherweise wird die Zustandsgröße B, die den Beladungszustand des Filters 114 charakterisiert, unmittelbar zur Steuerung des Abgasnachbehandlungssystems verwendet. Durch die Verwendung einer simulierten Größe.ist eine genaue Ermittlung des Beladungszustandes auch in den Betriebszuständen möglich, in denen verschiedene Sensoren, insbesondere der Differenzdrucksensor 120, kein zuverlässiges oder ein ungenaues Signal liefern.

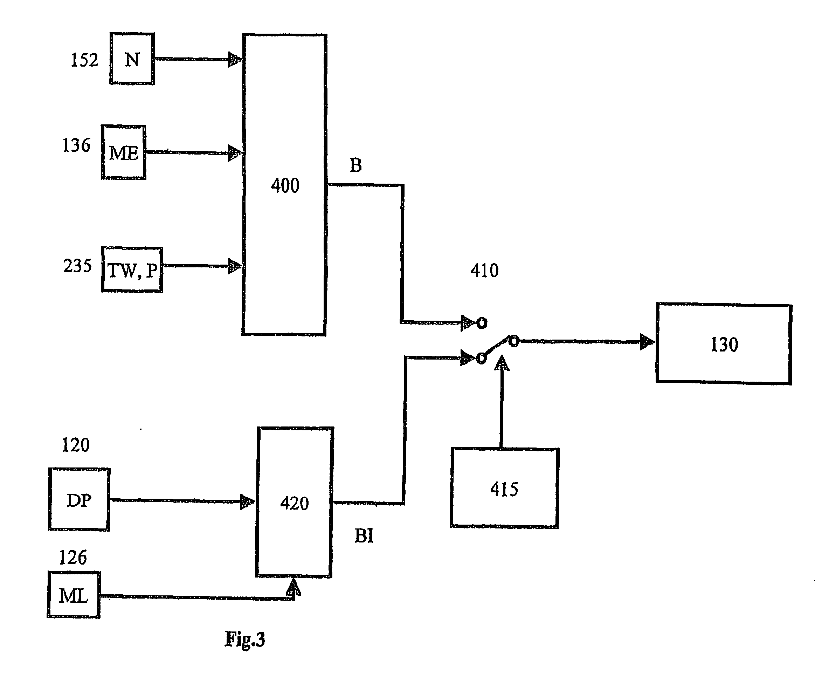

Eine weitere besonders vorteilhafte Ausgestaltung ist in Figur 3 dargestellt. Die in Figur 2 dargestellte Simulation zur Berechnung der Zustandsgröße B ist mit 400 bezeichnet. Diese Simulation 400 liefert die Zustandsgröße B bezüglich des Beladungszustandes des Filters 114. Desweiteren ist eine Berechnung 420 vorgesehen, der das Ausgangssignal DP des Differenzdrucksensors 120 und das Ausgangssignal ML des Luftmengenmessers 126 zugeleitet wird. Sowohl die Simulation 400 als auch die Berechnung 420 liefern Signale an ein Schaltmittel 410, das wahlweise eines der Signale auswählt und der Steuerung 130 bereitstellt. Das Schaltmittel 410 wird von einer Umschaltung 415 angesteuert.

Ausgehend von dem Druckwert PV, der den Druck vor dem Abgasnachbehandlungssystem 110 charakterisiert, wird eine Volumenstromgröße V, die dem Abgasvolumenenstrom entspricht, gemäß der nachfolgenden Formel berechnet.

$$V = \frac{(ML + ME) * R * T}{Pv}$$

Dabei entspricht die Größe ML der mittels des Sensors 126 gemessenen Luftmenge, bei der Größe R handelt es sich um eine Konstante. Ausgehend von diesem so berechneten Abgasvolumenstrom und dem Differenzdruck DP berechnet die Berechnung die Größe BI, die den Beladungszustand des Filters charakterisiert. Dabei erfolgt die Berechnung der Größe BI vorzugsweise gemäß der Formel:

$$BI = \frac{DP}{V}$$

Ausgehend von diesem Beladungszustand BI erfolgt in ersten Betriebszuständen die Steuerung des Abgasnachbehandlungssystems. Bei vorliegen bestimmter zweiter Betriebszustände steuert die Umschaltung 415 das Schaltmittel 410 derart an, daß die Zustandsgröße B der Simulation 400 zur Steuerung der Abgasnachbehandlung verwendet wird.

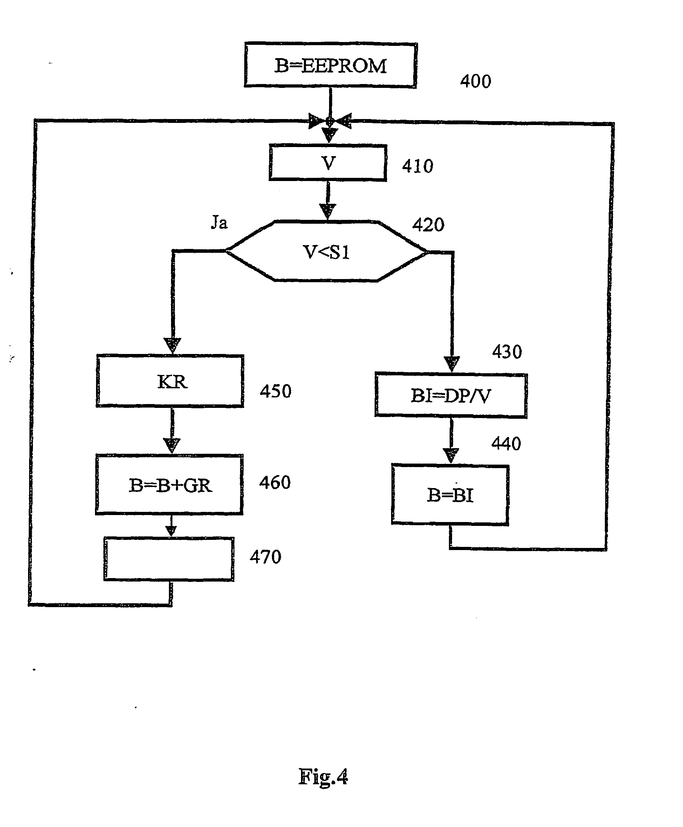

Die Funktionsweise der Umschaltung wird im folgenden anhand des Flußdiagrammes der Figur 4 beschrieben.

In einem ersten Schritt 400 wird aus einem Speicher die Zustandsgröße B ausgelesen, die beim Abschalten der Brennkraftmaschine vorlag. Als Speicher wird hierzu vorzugsweise ein EEPROM verwendet. Alternativ können auch andere Speicher verwendet werden, die beim Abschalten der Brennkraftmaschine ihren Inhalt nicht verlieren.

In einem anschließenden Schritt 410 wird der Betriebszustand der Brennkraftmaschine erfaßt. In der dargestellten Ausführungsform wird die Volumenstromgröße V ausgehend von Meßgrößen ermittelt.

Die sich anschließende Abfrage überprüft in der dargestellten Ausführungsform anhand der Volumenstromgröße V, ob ein erster oder ein zweiter Betriebszustand vorliegt. Der erste Betriebszustand liegt vor, wenn die Volumenstromgröße V größer als ein erster Schwellenwert S1 ist. Der zweite Betriebszustand liegt vor, wenn die Volumenstromgröße V kleiner und/oder gleich als der erste Schwellenwert S1 ist.

Liegt der erste Betriebszustand vor, so folgt der Schritt 430. In diesem Schritt wird die Zustandsgröße BI ausgehend von dem Differenzdruck und/oder der Volumenstromgröße, wie beschrieben, bestimmt. Im anschließenden Schritt 440 wird dieser Wert BI als Zustandsgröße abgespeichert. Anschließend folgt erneut Schritt 410.

Liegt der zweite Betriebszustand vor, so folgt der Schritt 450. In Schritt 450 wird die Größe KR, die den Partikelzuwachs im Filter 114 charakterisiert, bestimmt. Im anschließenden Schritt 460 wird die aktuell emittierte Partikelmenge, die dem Partikelzuwachs KR entspricht, zu dem abgespeicherten Wert der Zustandsgröße B hinzuaddiert. Dadurch ergibt sich der neue Wert der Zustandsgröße B. Diese wird anschließend in Schritt 470 ebenfalls abgespeichert. Anschließend folgt erneut Schritt 410.

Die Abfrage 420 bewirkt, dass bei vorliegen erster Betriebszustände der Brennkraftmaschine die Zustandsgröße (B) ausgehend von wenigstens einer Druckdifferenz vorgebbar ist, und dass bei vorliegen zweiter Betriebszustände die Zustandsgröße (B) ausgehend von wenigstens einer Betriebskenngröße der Brennkraftmaschine simuliert wird.

Durch die Abspeicherung der jeweils ermittelten Zustandsgröße in den Schritten 440 und 470 und die Addition in Schritt 460 ergibt sich, dass die Simulation der Zustandsgröße eine Integration beinhaltet. Dabei wird beim Übergang von dem ersten Betriebszustand in den zweiten Betriebszustand der ausgehend von der Druckdifferenz vorgegebene Wert der Zustandsgröße als Startwert der Integration verwendet.

Insbesondere beim Abschalten der Brennkraftmaschine und/oder des Abgasnachbehandlungssystems wird die Zustandsgröße in dem Speicher dauerhaft abgelegt. Bei der Inbetriebnahme des Abgasnachbehandlungssystems und/oder der Brennkraftmaschine wird dieser abgespeicherte Wert In Schritt 400 ausgelesen und als Startwert der Integration verwendet.

Bei einer weiteren Ausführungsform werden in Schritt 410 nicht der Volumenstrom, sondern andere Größen erfasst. Die Abfrage 420 überprüft, ob ein dynamischer Betriebszustand vorliegt. Liegt ein solcher dynamischer Betriebszustand vor, so folgt Schritt 450.

Solche dynamischen Betriebszuständen liegen beispielsweise vor, wenn sich Betriebskenngrößen schnell ändern. Zur Erkennung von solchen dynamischen Betriebszuständen kann insbesondere die eingespritzte Kraftstoffmenge, die Drehzahl, der Fahrerwunsch und/oder die Luftmenge ausgewertet werden. Bei dieser Ausführungsform überprüft die Abfrage 420, ob die Änderung der Drehzahl, die Änderung der Luftmenge und/oder die Änderung einer anderen geeigneten Größe größer als der erste Schwellenwert ist.

**Patentansprüche**

1. Verfahren zum Ermitteln des Beladungszustands eines in einer Abgasteitung (104) einer Brennkraftmaschine (100) angeordneten Partikelfilters (114), bei welchem eine den Beladungszustand des Partikelfilters (114) charakterisierende Zustandsgröße (B) ausgehend von wenigstens einer Druckdifferenz (DP) zwischen dem Druck (PV) vor dem Partikelfilter (114) und dem Druck nach dem Partikelfilter (114) ermittelt wird, bei welchem weiterhin eine den Beladungszustand des Partikelfilters (114) charakterisierende Zustandsgröße (BI) ausgehend von wenigstens einer Betriebskenngröße (N, ME, TW, P, T, ML) der Brennkraftmaschine (100) simuliert wird, **dadurch gekennzeichnet, dass** bei Vorliegen erster Betriebszustände der Brennkraftmaschine (100) die ermittelte Zustandsgröße (B) ausgewählt wird und dass bei Vorliegen von den ersten Betriebszuständen unterschiedlichen zweiten Betriebszuständen der Brennkraftmaschine (100) die simulierte Zustandsgröße (BI) ausgewählt wird.

2. Verfahren nach Anspruch 1, **dadurch gekennzeichnet, dass** der erste Betriebszustand der Brennkraftmaschine (100) vorliegt, wenn eine Volumenstromgröße (V), die den Abgasvolumenstrom charakterisiert, größer als ein erster Schwellenwert (S1) ist und dass der zweite Betriebszustand der Brennkraftmaschine (100) vorliegt, wenn die Volumenstromgröße unterhalb des ersten Schwellenwerts (S1) liegt.

3. Verfahren nach Anspruch 1, **dadurch gekennzeichnet, dass** der erste Betriebszustand der Brennkraftmaschine (100) vorliegt, wenn eine Betriebskenngröße der Brennkraftmaschine (100), die ein Maß für den dynamischen Betriebszustand der Brennkraftmaschine (100) ist, kleiner als ein zweiter Schwellenwert ist und dass der zweite Betriebszustand der Brennkraftmaschine (100) vorliegt, wenn die Betriebskenngröße größer als der zweite Schwellenwert ist.

4. Verfahren nach Anspruch 3, **dadurch gekenn-**

zeichnet, dass die Betriebskenngröße der Brennkraftmaschine (100) die Änderung der eingespritzten Kraftstoffmenge (ME), die Änderung der Drehzahl (N), die Änderung des Fahrerwunsches und/ oder die Änderung der Luftmenge (ML) charakterisiert.

5. Verfahren nach Anspruch 1, **dadurch gekennzeichnet, dass** die simulierte Zustandsgröße (BI) ausgehend von wenigstens der Drehzahl (N) und/ oder einem die eingespritzte Kraftstoffmenge charakterisierenden Signal (ME) simuliert wird.

6. Verfahren nach Anspruch 1 oder 5, **dadurch gekennzeichnet, dass** die Simulation der Zustandsgröße (BI) eine Integration beinhaltet, wobei bei der Inbetriebnahme des Partikelfilters (114) und/oder der Brennkraftmaschine (100) ein bei der letzten Außerbetriebssetzung abgespeicherter Wert als Startwert verwendet wird.

7. Verfahren nach Anspruch 1, **dadurch gekennzeichnet, dass** bei der Ermittlung der ermittelten Zustandsgröße (B) neben der Druckdifferenz (DP) eine Volumenstromgröße (V) berücksichtigt wird, die den Abgasvolumenstrom charakterisiert.

8. Verfahren nach Anspruch 7, **dadurch gekennzeichnet, dass** die Volumenstromgröße (V) ausgehend von Betriebskenngrößen vorgebbar ist, welche die angesaugte Luftmenge (ML) und/oder die eingespritzte Kraftstoffmenge (ME) charakterisieren.

9. Vorrichtung zum Ermitteln des Beladungszustands eines in einer Abgasleitung (104) einer Brennkraftmaschine (100) angeordneten Partikelfilters (114), mit Mitteln (120a, 120b, 134), welche eine den Zustand des Abgasnachbehandlungssystems (110, 112, 114) charakterisierende Zustandsgröße (B) ausgehend von wenigstens einer Druckdifferenz (DP) zwischen dem Druck (PV) vor dem Partikelfilter (114) und dem Druck nach dem Partikelfilter (114) ermitteln und mit Mitteln (200, 205, 210, 220, 230, 240, 400), welche eine den Zustand des Partikelfilters (114) charakterisierende Zustandsgröße (BI) ausgehend von wenigstens einer Betriebskenngröße (N, ME, TW, P, T, ML) der Brennkraftmaschine (100) simulieren, **dadurch gekennzeichnet, dass** ein von einer Umschaltung (415) angesteuertes Schaltmittel (410) bei Vorliegen erster Betriebszustände der Brennkraftmaschine (100) die ermittelte Zustandsgröße (B) auswählt und welches bei Vorliegen von den ersten Betriebszuständen unterschiedlichen zweiten Betriebszuständen der Brennkraftmaschine (100) die simulierte Zustandsgröße (BI) auswählt.

10. Computerprogramm mit Programmcode-Mitteln, um alle Schritte von einem der Ansprüche 1 bis 9 durchzuführen, wenn das Programm auf einem Steuergerät (130, 132, 134) für eine Brennkraftmaschine (100) ausgeführt wird.

11. Computerprogrammprodukt mit Programmcode-Mitteln, die auf einem computerlesbaren Datenträger gespeichert sind, um das Verfahren nach einem der Ansprüche 1 bis 9 durchzuführen, wenn das Programmprodukt auf einem Steuergerät (130, 132,134) für eine Brennkraftmaschine'(100), ausgeführt wird.

**Claims**

1. Method for determining the loading state of a particle filter (114) which is arranged in an exhaust line (104) of an internal combustion engine (100), in which method a state variable (B) which characterizes the loading state of the particle filter (114) is determined on the basis of at least one pressure difference (DP) between the pressure (PV) upstream of the particle filter (114) and the pressure downstream of the particle filter (114), in which method, in addition, a state variable (BI) which characterizes the loading state of the particle filter (114) is simulated on the basis of at least one characteristic operating variable (N, ME, TW, P, T, ML) of the internal combustion engine (100), **characterized in that**, in the presence of first operating states of the internal combustion engine (100), the determined state variable (B) is selected, and in the presence of second operating states, which differ from the first operating states, of the internal combustion engine (100), the simulated state variable (BI) is selected.

2. Method according to Claim 1, **characterized in that** the first operating state of the internal combustion engine (100) is present if a volume flow variable (V) which characterizes the exhaust gas volume flow is greater than a first threshold value (S1), and **in that** the second operating state of the internal combustion engine (100) is present if the volume flow variable is lower than the first threshold value (S1).

3. Method according to Claim 1, **characterized in that** the first operating state of the internal combustion engine (100) is present if a characteristic operating variable of the internal combustion engine (100) which is a measure for the dynamic operating state of the internal combustion engine (100) is lower than a second threshold value, and **in that** the second operating state of the internal combustion engine (100) is present if the characteristic operating variable is greater than the second threshold value.

4. Method according to Claim 3, **characterized in that** the characteristic operating variable of the internal combustion engine (100) characterizes the change in the injected fuel quantity (ME), the change in the rotational speed (N), the change in the driver demand and/or the change in the air quantity (ML).

5. Method according to Claim 1, **characterized in that** the simulated state variable (BI) is simulated on the basis of at least the rotational speed (N) and/or a signal (ME) which characterizes the injected fuel quantity.

6. Method according to Claim 1 or 5, **characterized in that** the simulation of the state variable (BI) comprises an integration, wherein during a start-up of the particle filter (114) and/or of the internal combustion engine (100), a value which was stored during the last shut-down is used as a starting value.

7. Method according to Claim 1, **characterized in that**, in the determination of the determined state variable (B), a volume flow variable (V) which characterizes the exhaust-gas volume flow is taken into consideration in addition to the pressure difference (DP).

8. Method according to Claim 7, **characterized in that** the volume flow variable (V) can be predefined on the basis of characteristic operating variables which characterize the inducted air quantity (ML) and/or the injected fuel quantity (ME).

9. Device for determining the loading state of a particle filter (114) which is arranged in an exhaust line (104) of an internal combustion engine (100), having means (120a, 120b, 134) which determine a state variable (B), which characterizes the state of the exhaust-gas aftertreatment system (110, 112, 114), on the basis of at least one pressure difference (DP) between the pressure (PV) upstream of the particle filter (114) and the pressure downstream of the particle filter (114), and having means (200, 205, 210, 220, 230, 240, 400) which simulate a state variable (BI), which characterizes the state of the particle filter (114), on the basis of at least one characteristic operating variable (N, ME, TW, P, T, ML) of the internal combustion engine (100), **characterized in that**, in the presence of first operating states of the internal combustion engine (100), a switching means (410) which is activated by a switch (415) selects the determined state variable (B), and in the presence of second operating states, which differ from the first operating states, of the internal combustion engine (100), said switching means (410) selects the simulated state variable (BI).

10. Computer program having program code means in order to carry out all the steps of one of Claims 1 to 9 when the program is executed on a control unit (130, 132, 134) for an internal combustion engine (100).

11. Computer program product having program code means which are stored on a computer-readable data carrier in order to carry out the method according to one of Claims 1 to 9 when the program product is executed on a control unit (130, 132, 134) for an internal combustion engine (100).

**Revendications**

1. Procédé pour déterminer le degré d'encrassement d'un filtre à particules (114) disposé dans une conduite de gaz d'échappement (104) d'un moteur à combustion interne (100), dans lequel une valeur d'état (B) caractérisant l'état d'encrassement du filtre à particules (114) est déterminée à partir d'au moins une différence de pression (DP) entre la pression (PV) avant le filtre à particules (114) et la pression après le filtre à particules (114), dans lequel en outre une valeur d'état (BI) caractérisant l'état d'encrassement du filtre à particules (114) est simulée à partir d'au moins une valeur caractéristique de fonctionnement (N, ME, TW, P, T, ML) du moteur à combustion interne (100), **caractérisé en ce qu'**en présence de premiers états de fonctionnement du moteur à combustion interne (100), la valeur d'état déterminée (B) est sélectionnée, et en présence de deuxièmes états de fonctionnement du moteur à combustion interne (100) différents des premiers états de fonctionnement, on choisit la valeur d'état simulée (BI).

2. Procédé selon la revendication 1, **caractérisé en ce que** le premier état de fonctionnement du moteur à combustion interne (100) a lieu lorsqu'une valeur de débit volumique (V), qui caractérise le débit volumique de gaz d'échappement, est supérieure à une première valeur seuil (S1), et **en ce que** le deuxième état de fonctionnement du moteur à combustion interne (100) a lieu lorsque la valeur de débit volumique est en dessous de la première valeur seuil (S1).

3. Procédé selon la revendication 1, **caractérisé en ce que** le premier état de fonctionnement du moteur à combustion interne (100) a lieu lorsqu'une valeur caractéristique de fonctionnement du moteur à combustion interne (100), qui est une mesure de l'état de fonctionnement dynamique du moteur à combustion interne (100), est inférieure à une deuxième valeur seuil et **en ce que** le deuxième état de fonctionnement du moteur à combustion interne (100) a lieu lorsque la valeur caractéristique de fonctionnement est supérieure à la deuxième valeur seuil.

**4.** Procédé selon la revendication 3, **caractérisé en ce que** la valeur caractéristique de fonctionnement du moteur à combustion interne (100) caractérise la variation de la quantité de carburant injectée (ME), la variation du régime (N), la variation du souhait du conducteur et/ou la variation de la quantité d'air (ML).

**5.** Procédé selon la revendication 1, **caractérisé en ce que** la valeur d'état simulée (BI) est simulée à partir d'au moins le régime (N) et/ou d'un signal (ME) caractérisant la quantité de carburant injectée.

**6.** Procédé selon la revendication 1 ou 5, **caractérisé en ce que** la simulation de la valeur d'état (BI) contient une intégration, une valeur stockée lors du dernier arrêt étant utilisée comme valeur de départ lors de la mise en service du filtre à particules (114) et/ou du moteur à combustion interne (100).

**7.** Procédé selon la revendication 1, **caractérisé en ce que** lors de la détermination de la valeur d'état déterminée (B), on tient compte, outre de la différence de pression (DP), d'une valeur de débit volumique (V) qui caractérise le débit volumique de gaz d'échappement.

**8.** Procédé selon la revendication 7, **caractérisé en ce que** la valeur de débit volumique (V) peut être prédéfinie à partir de valeurs caractéristiques de fonctionnement, qui caractérisent la quantité d'air aspirée (ML) et/ou la quantité de carburant injectée (ME).

**9.** Dispositif pour déterminer l'état d'encrassement d'un filtre à particules (114) disposé dans une conduite de gaz d'échappement (104) d'un moteur à combustion interne (100), comprenant des moyens (120a, 120b, 134), qui déterminent une valeur d'état (B) caractérisant l'état du système de post-traitement des gaz d'échappement (110, 112, 114) à partir d'au moins une différence de pression (DP) entre la pression (PV) avant le filtre à particules (114) et la pression après le filtre à particules (114), et comprenant des moyens (200, 205, 210, 220, 230, 240, 400) qui simulent un valeur d'état (BI) caractérisant l'état du filtre à particules (114) à partir d'au moins une valeur caractéristique de fonctionnement (N, ME, TW, P, T, ML) du moteur à combustion interne (100), **caractérisé en ce qu'**un moyen de commutation (410) commandé par une commutation (415), en présence de premiers états de fonctionnement du moteur à combustion interne (100), sélectionne la valeur d'état déterminée (B), et, en présence de deuxièmes états de fonctionnement du moteur à combustion interne (100) différents des premiers états de fonctionnement, sélectionne la valeur d'état simulée (BI).

**10.** Programme informatique avec moyens de code programme, permettant d'exécuter toutes les étapes de l'une quelconque des revendications 1 à 9, lorsque le programme est exécuté sur un appareil de commande (130, 132, 134) pour un moteur à combustion interne (100).

**11.** Produit de programme informatique avec moyens de code programme, qui sont mémorisés sur un support de données lisible par ordinateur, afin de mettre en oeuvre le procédé selon l'une quelconque des revendications 1 à 9, lorsque le produit de programme est exécuté sur un appareil de commande (130, 132, 134) pour un moteur à combustion interne (100).

Fig.1

**Fig.2**

EP 1 362 167 B1

Fig.3

EP 1 362 167 B1

```
                        ┌─────────────────┐
                        │    B=EEPROM     │        400
                        └─────────────────┘
                                 │
                        ┌─────────────────┐
                        │        V        │  410
                        └─────────────────┘
                                 │
        Ja                    ╱──────────╲        420
      ┌───────────────────  │   V<S1   │
      │                      ╲──────────╱
      │                                 │
      ▼                                 ▼        430
┌─────────────┐                  ┌─────────────┐
│     KR      │  450             │   BI=DP/V   │
└─────────────┘                  └─────────────┘
      │                                 │        440
      ▼                                 ▼
┌─────────────┐                  ┌─────────────┐
│  B=B+GR     │  460             │    B=BI     │
└─────────────┘                  └─────────────┘
      │
      ▼
┌─────────────┐
│             │  470
└─────────────┘
```

Fig.4

EP 1 362 167 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19906287 A1
- EP 1081347 A1